# EUROPÄISCHE PATENTSCHRIFT

(11) **EP 1 310 411 B1**
(45) Veröffentlichungstag und Bekanntmachung des Hinweises auf die Patenterteilung: **28.12.2005**
(21) Anmeldenummer: 02023646.9
(22) Anmeldetag: 21.10.2002
(51) Int. Cl.: B60S 1/52, B60S 1/48

(54) **Beheizbare Scheibenwaschanlagendüse**
Heatable windscreen washer nozzle
Gicleur d'installation de lavage de vitres pouvant être chauffé

(30) Priorität: 13.11.2001 DE 10155573
(43) Veröffentlichungstag der Anmeldung: 14.05.2003
(73) Patentinhaber: Tyco Electronics AMP GmbH, 64625 Bensheim (DE)
(72) Erfinder: Beck, Karl, 63225 Langen (DE); Schmidt, Heinrich, 63225 Langen (DE)
(74) Vertreter: Grünecker, Kinkeldey, Stockmair & Schwanhäusser Anwaltssozietät

(56) Entgegenhaltungen:
- EP-A- 0 353 643
- EP-A- 0 502 322
- DE-A- 2 519 902
- DE-A- 3 324 268
- DE-A- 4 100 884
- DE-A- 19 855 388
- DE-A- 19 902 432
- GB-A- 1 504 551
- GB-A- 2 274 410
- US-A- 3 287 031

## Beschreibung

Die vorliegende Erfindung bezieht sich auf eine beheizbare Scheibenwaschanlagendüse, vorzugsweise für ein Kraftfahrzeug, nach dem Oberbegriff des Patentanspruchs 1.

Beheizbare Scheibenwaschanlagendüsen werden insbesondere in der Kraftfahrzeugtechnik eingesetzt, um zu verhindern, dass auf die Windschutzscheibe aufgebrachtes Waschwasser bei Außentemperaturen unterhalb des Gefrierpunktes der Scheibenwaschlösung gefriert. Herkömmliche beheizbare Scheibenwaschanlagendüsen verwenden dabei entweder, wie in der Deutschen Offenlegungsschrift DE 38 26 646 A1 gezeigt, Heizelemente aus einem elektrisch leitfähigen Kunststoff oder PTC-Elemente, die bei Stromzufuhr erwärmt werden.

Üblicherweise geschieht die elektrische Kontaktierung solcher herkömmlicher beheizbarer Scheibenwaschanlagendüsen über eine nicht lösbare Verbindung, wie beispielsweise eine Lötverbindung. Daher wird bei der Montage das herkömmliche Heizelement zunächst elektrisch mit einem Anschlusskabel kontaktiert und anschließend in einem Kunststoffgrundkörper der Scheibenwaschanlagendüse eingeklebt.

Tritt während des Betriebes an dem Heizelement, der elektrischen Zuführung oder aber der Spitzdüse ein Defekt auf, muss in jedem Falle der komplette Kabelbaum bestehend aus dem elektrischen Anschlusskabel, der vollständigen beheizbaren Scheibenwaschanlagendüse und einem eventuellen weiteren Anschlussstecker zur Verbindung des Anschlusskabels mit dem Bordnetz, ausgetauscht werden. Dies bedingt zum einen vergleichsweise hohe Materialkosten bei der Reparatur, zum anderen einen arbeitsaufwendigen Austausch, da das gesamte Anschlusskabel entfernt werden muss.

Aus der Druckschrift DE 41 00 884 A1 ist eine Düsenanordnung bekannt, bei der ein Grundkörper aus elektrisch leitfähigem Material einen Kanal besitzt, durch welchen im Betrieb bie Flüssigkeit einer Düsenöffnung zugeführt wird. Die Düsenanordnung weist ein an den Grundkörper angepasstes Verbindungsteil und elektrische Kontakte auf, die so angeordnet sind, dass ein elektrischer Strom durch den Grundkörper geschickt werden kann. Ein in dem Verbindungsteil angeordneter Thermistor ist elektrisch leitend mit dem Grundkörper verbunden und bewirkt entweder das Aufheizen und die Temperaturregelung des Heizvorgangs oder aber nur die Temperaturregelung. Das Verbindungsteil kann so in den Grundkörper eingeschoben werden, dass der Thermistor mit dem Grundkörper elektrisch verbunden wird.

Die Entgegenhaltung EP 0 502 322 A1 offenbart eine Scheibenwascheinrichtung mit einer Heizeinrichtung, die ein PTC-Flächenheizelement und einen die Wasserführung umschließenden Wärmeleiter aufweist. Die Anschlüsse des Flächenheizelementes sind zu einem Steckverbinder geführt, der den Kontakt mit äußeren Anschlüssen erlaubt. Diese Heizeinrichtung wird von einem Gehäuse abgedeckt.

Eine beheizbare Scheibenwaschdüse, bei der ein Einsatz aus leitfähigem Kunststoff in eine Außenhülle aus nicht leitfähigem Kunststoff eingebettet ist, wird in der Druckschrift EP 0 353 643 A2 beschrieben. Dabei fungiert der innere Einsatz sowohl als Wasserzuführungskanal wie auch als Heizelement. Bei Anlegen eines elektrischen Stroms an Anschlussfahnen des Kunststoffkörpers erwärmt sich dieser. Die Anschlussfahnen, die mit Stromzuführungskabeln verbunden sind, werden unlösbar mittels Ultraschallverschweißen oder eines heißen Stempels mit dem leitfähigen Kunststoff des Einsatzes verbunden.

Aus der Druckschrift DE 199 02 432 A1 ist eine beheizte Waschdüse mit Anschlussstück für eine Scheibenwaschanlage bekannt, bei der das Anschlussstück zum Verbinden von Schlauchleitungen mit der beheizten Waschdüse dient und gleichzeitig Aufnahmen für die elektrischen Leitungen eines Heizelementes besitzt. Dabei ist das in dieser Druckschrift nicht näher dargestellte Heizelement mit Messerkontakten zum Verbinden mit dem Anschlussstück ausgestattet.

Die Entgegenhaltung GB 2 274 410 A zeigt eine Düsenanordnung für eine Scheibenwaschanlage, bei der ein mit einer elektrischen Leitung verbundenes Heizelement in eine Aufnahme eines Düsenkörpers eingeschoben und dort von einem Federarm festgehalten wird.

Eine Kraftfahrzeugscheibenwaschanlage mit einer elektrisch beheizten Spritzdüse, bei der eine Halbleiterschaltung zum Beheizen der Spritzdüse mit Hilfe der Fahrzeugbatterie vorgesehen ist, ist in der Druckschrift DE 25 19 902 A1 gezeigt. Dabei werden die benötigten Schaltungselemente einschließlich des Heizwiderstandes in einer Bohrung der Spritzdüse eingegossen. Anschlussstifte ermöglichen den Kontakt zu äußeren Zuleitungen.

Die Druckschrift DE 198 55 388 A1 befasst sich mit einer Heizung für ein zu erwärmendes Bauteil eines Kraftfahrzeugs, die eine aus Aluminium gefertigte Aufnahme, in der ein Heizelement, das mit elektrischen Zuleitungen versehen ist, mittels einer Vergussmasse eingegossen ist.

Aus der Entgegenhaltung US 3,287,031 ist eine Steckverbindung mit einer über Führungsvorsprünge und komplementäre Führungsnuten realisierten Codierung bekannt.

Die Entgegenhaltung DE 33 24 268 A1 schließlich betrifft eine Spritzdüsenvorrichtung für Scheibenwaschanlagen von Kraftfahrzeugen, bei der ein PTC-Heizelement, das fest mit einer Anschlussleitung verbunden ist, in einem Zwischenstück mit einem Wärmeleiter montiert ist. Dieser Wärmeleiter ragt in eine Zuführbohrung des Düsenschafts hinein, um die Flüssigkeit zu heizen.

Der vorliegenden Erfindung liegt die Aufgabe zugrunde, eine verbesserte beheizbare Scheibenwaschanlagendüse anzugeben, die zuverlässiger und kostengünstiger als herkömmliche Scheibenwaschanlagendüsen ist und darüber hinaus wartungsfreundlicher.

Diese Aufgabe wird durch eine beheizbare Scheibenwaschanlagendüse mit den Merkmalen des Patentanspruchs 1 gelöst. Die Unteransprüche beschreiben vorteilhafte Weiterbildungen der Erfindung.

Es ist aus dem Dokument DE-A-4 100 884 bekannt, dass durch eine reversibel lösbare elektrische Verbindung zwischen einem Heizelement der beheizbaren Scheibenwaschanlagendüse und einem Anschlusskabel ein modularer Aufbau erreicht wird, der im Reparaturfall Arbeitszeit und Materialkosten spart. Bei einem Defekt des Heizelementes oder an einer Spritzdüse genügt es, die aufsteckbare Scheibenwaschanlagendüse zu entfernen und eine neue Scheibenwaschanlagendüse aufzustecken. Dieser Austausch kann von außen erfolgen, ohne das im Inneren des Kraftfahrzeugs verlegte Anschlusskabel entfernen zu müssen.

Eine leicht lösbare elektrische Verbindung, die andererseits eine besonders zuverlässige elektrische Kontaktierung gewährleistet, stellt die Ausgestaltung der elektrischen Verbindung als Steckverbindung mit einem Buchsenteil und einem Steckerteil dar.

Dabei ist aus Sicherheitsgründen vorteilhafterweise das Steckerteil der Scheibenwaschanlagendüse zugeordnet und das Buchsenteil dem Anschlusskabel, so dass an dem angeschlossenen Anschlusskabel eine anliegende Spannung nicht offen zugänglich ist.

Wird das Heizelement durch einen hindurchfließenden elektrischen Strom erwärmt, weist das Steckerteil zweckmäßigerweise zwei Kontaktstifte auf.

Ein besonders kostengünstiges und zuverlässiges Heizelement stellen Widerstände mit positivem Temperaturkoeffizienten, die sogenannten PTC-Elemente, dar.

Erfindungsgemäß weist der Grundkörper der Scheibenwaschanlagendüse einen Heizelementeinsatz auf, in dem das Heizelement angeordnet ist, wobei der Heizelementeinsatz zumindest teilweise in eine zugehörige Aufnahme in dem Grundkörper einführbar ist. Auf diese Weise wird die Montage erleichtert und durch weitgehende Automatisierung verbilligt.

Ein besonders guter Wärmeübergang bei gleichzeitig guter Montierbarkeit wird erfindungsgemäß dadurch erreicht, daß der Heizelementeinsatz eine im wesentlichen zylinderförmige äußere Form hat und die Aufnahme an dem Grundkörper rohrförmig ausgestattet ist.

Sieht man vor, dass die elektrische Verbindung bei der Montage in der Aufnahme geführt ist, so kann eine besonders sichere elektrische Kontaktierung gewährleistet werden. Eine besonders effektive und leicht herstellbare Art und Weise der Führung stellt ein Führungsvorsprung an der Aufnahme dar, der mit einer Führungsnut am äußeren Umfang der elektrischen Verbindung zusammenwirkt.

Gemäß einer vorteilhaften Weiterbildung der Erfindung weist der Heizelementeinsatz eine Heizelementaufnahme, in die das Heizelement einschiebbar ist, auf. Dadurch kann die Montage des Heizelementeinsatzes wesentlich vereinfacht werden.

Eine besonders sichere elektrische Kontaktierung kann erreicht werden, wenn der Grundkörper der beheizbaren Scheibenwaschanlagendüse ein Rastelement aufweist, das mit einem zugehörigen Gegenstück die elektrische Verbindung durch Verrasten mechanisch fixiert.

Anhand der in den beiliegenden Zeichnungen dargestellten Ausgestaltungen wird die Erfindung im folgenden näher erläutert. Ähnliche oder korrespondierende Einzelheiten der erfindungsgemäßen beheizbaren Scheibenwaschanlagendüse sind in den Figuren mit denselben Bezugszeichen versehen. Es zeigen:
- **Figur 1**: eine teilweise geöffnete perspektivische Ansicht einer erfindungsgemäßen beheizbaren Scheibenwaschanlagendüse;
- **Figur 2**: einen Schnitt durch einen Grundkörper der Scheibenwaschanlagendüse entlang Schnittlinie A-A gemäß Figur 3;
- **Figur 3**: eine Seitensnsicht des Grundkörpers der Scheibenwaschanlagendüse;
- **Figur 4**: eine weitere Seitenansicht des Grundkörpers der Scheibenwaschanlagendüse;
- **Figur 5**: eine Seitenansicht der erfindungsgemäßen Scheibenwaschanlagendüse aus Figur 1;
- **Figur 6**: eine weitere Seitenansicht der Scheibenwaschanlagendüse;
- **Figur 7**: eine Ansicht von oben auf die Scheibenwaschanlagendüse;
- **Figur 8**: eine Ansicht von oben auf einen Heizelementeinsatz;
- **Figur 9**: einen Schnitt durch den Heizelementeinsatz entlang Schnittlinie B-B gemäß Figur 10;
- **Figur 10**: eine Seitenansicht des Heizelementeinsatzes;
- **Figur 11**: eine weitere Seitenansicht des Heizelementeinsatzes;
- **Figur 12**: eine Ansicht von unten auf den Heizelementeinsatz;
- **Figur 13**: eine Explosionszeichnung des Heizelementeinsatzes;
- **Figur 14**: eine perspektivische Ansicht des Heizelementeinsatzes;
- **Figur 15**: eine weitere perspektivische Ansicht des Heizelementeinsatzes;
- **Figur 16**: eine Ansicht von oben auf ein mit einem elektrischen Anschlusskabel verbindbares Buchsenteil;
- **Figur 17**: eine Seitenansicht des Buchsenteils;
- **Figur 18**: ein Schnittbild durch das Buchsenteil entlang Schnittlinie C-C gemäß Figur 17;
- **Figur 19**: eine weitere Seitenansicht des Buchsenteils;
- **Figur 20**: eine Ansicht von unten auf das Buchsenteil;
- **Figur 21**: eine Explosionszeichnung des Buchsenteils;
- **Figur 22**: eine perspektivische Ansicht des Buchsenteils;
- **Figur 23**: eine weitere perspektivische Ansicht des Buchsenteils.

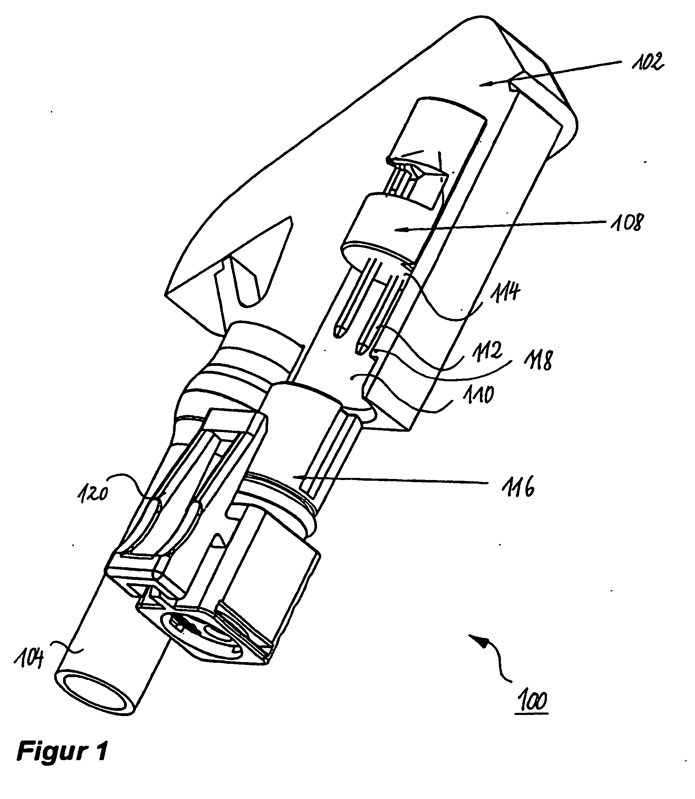

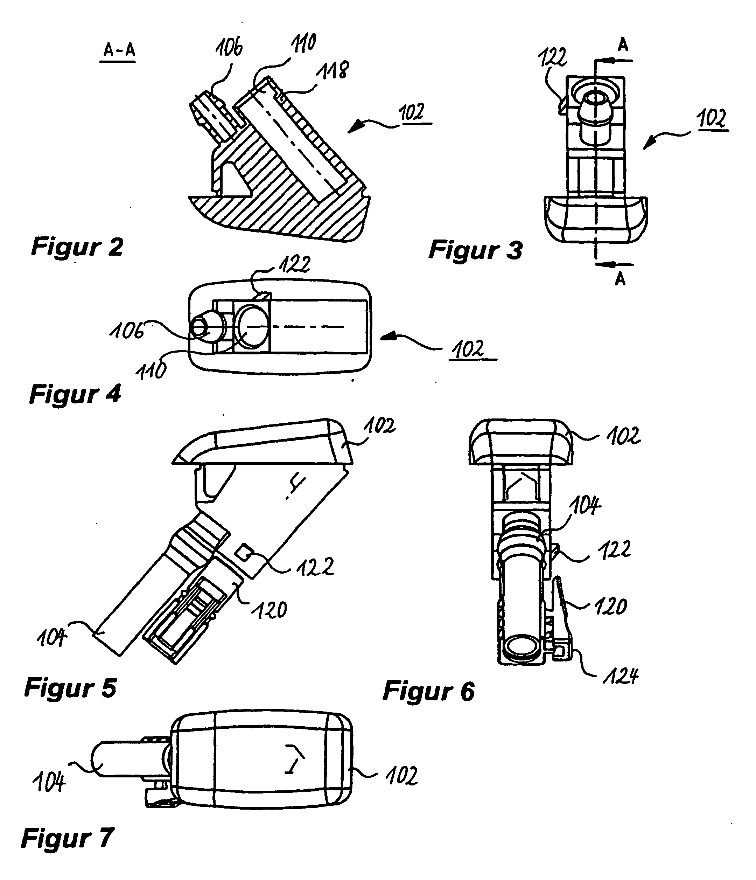

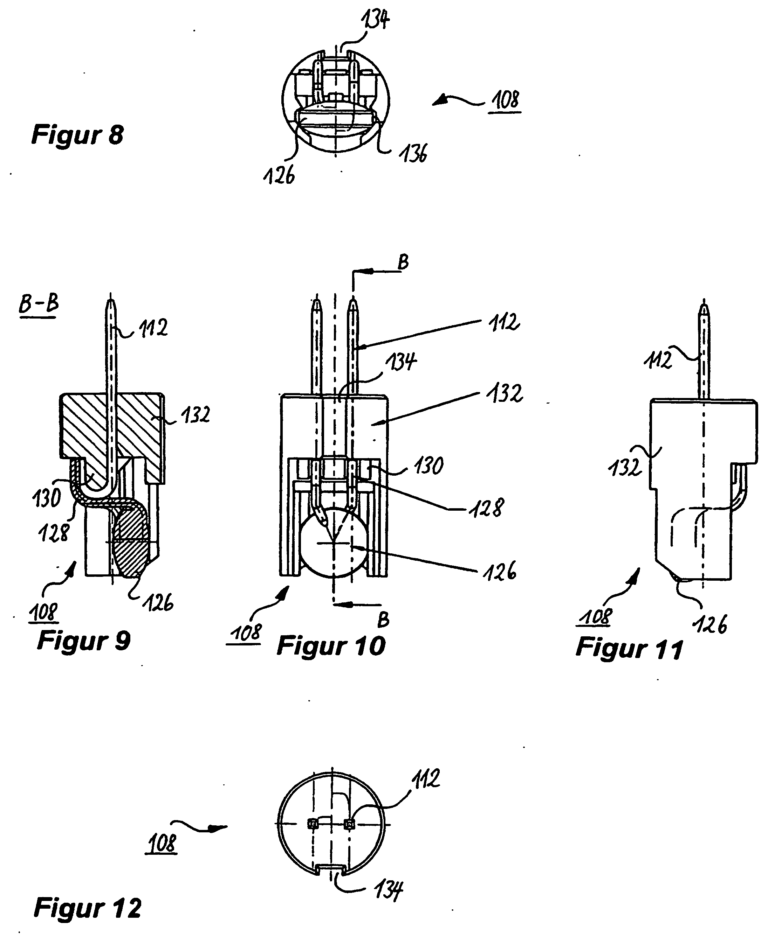

In Figur 1 ist die erfindungsgemäße beheizbare Scheibenwaschanlagendüse 100 bei gelöster elektrischer Verbindung gezeigt. Die Scheibenwaschanlagendüse weist einen Grundkörper 102 auf, in dem, hier nicht sichtbar, eine oder mehrere Spritzdüsen zum Aufbringen des Waschwasser vorgesehen sind. Ein Schlauch 104, der über ein an dem Grundkörper 102 angeformtes Schlauchansatzstück 106 geschoben wird, stellt die Verbindung zum Wassertank her. In der teilweise geöffneten Darstellung der Figur 1 ist des weiteren ein Heizelementeinsatz 108 erkennbar, der in eine entsprechende rohrförmige Aufnahme 110 am Grundkörper 102 eingeschoben ist und mittels einer Vergussmasse oder eines Klebers mechanisch fixiert werden kann. Im Inneren des Heizelementeinsatzes 108 befindet sich, wie aus den Figuren 8 bis 12 noch deutlicher erkennbar, ein PTC-Heizelement, dessen Anschlüsse als Steckerstifte 112 eines Steckerteils 114 aus dem Heizelementeinsatz herausgeführt sind. Der Kontakt zu dem in den Figuren nicht dargestellten elektrischen Anschlusskabel erfolgt über Zusammenstecken des Steckerteils 114 mit einem zugehörigen Buchsenteil 116. Dabei wird das Buchsenteil 116 beim Schließen der elektrischen Verbindung über einen in der Aufnahme 110 vorgesehenen Führungsvorsprung 118 geführt. Eine in dieser Darstellung nicht erkennbarer, an den Grundkörper 102 angeformter Rasthaken 122 (siehe z. B. Figur 3) wirkt mit dem Rastelement 120 so zusammen, dass die elektrische Verbindung beim Schließen des Kontaktes mechanisch fixiert ist. Gemäß der hier gezeigten Ausführungsform kann das Anschlusskabel über eine weitere Steckverbindung an das Buchsenteil 116 angeschlossen werden. Es kann aber auch eine Lötverbindung vorgesehen sein.

Eine mögliche Ausgestaltung des Schlauchansatzstückes 106 ist aus den Darstellungen des vorzugsweise aus Kunststoff gefertigten Grundkörpers 102 der Figuren 2 bis 4 erkennbar: Das Schlauchansatzstück 106 weist eine Verdickung ("Schlaucholive") zum sicheren Halten des Schlauches auf, die sich nach vorne hin so verjüngt, dass ein einfaches Einführen des Schlauchansatzstückes 106 in den Schlauch gewährleistet ist. Die Aufnahme 110 für den Heizelementeinsatz ist im wesentlichen rohrförmig ausgeführt und ermöglicht eine sichere Positionierung des Heizelementeinsatzes 108 wie auch des mit dem Anschlusskabel verbindbaren Buchsenteils 116 über den Führungsvorsprung 118.

Wie aus den Figuren 5 bis 7, die verschiedene Ansichten der vollständigen beheizbaren Scheibenwaschanlagendüse 100 zeigen, erkennbar, weist der Grundkörper 102 einen Rasthaken 122 auf, der das Buchsenteil 116 im eingeschobenen Zustand durch Verrasten mit dem Rastelement 120 gegen unbeabsichtigtes Lösen der elektrischen Verbindung sichert. Das Rastelement 120 kann durch Druck auf die Betätigungsfläche 124 so verkippt werden, dass der Rasthaken 122 freigegeben wird und das Buchsenteil 116, beispielsweise zum Austausch der Scheibenwaschanlagendüse, abgezogen werden kann.

Der Heizelementeinsatz 108 ist in den Figuren 8 bis 12 in verschiedenen Ansichten gezeigt. Gemäß einer bevorzugten Ausführungsform erfolgt die Energiezufuhr über einen Widerstand mit positivem Temperaturkoeffizienten, einem PCT-Heizelement 126. Der Heizelementeinsatz 108 weist ein aus einem elektrisch isolierenden Material hergestelltes Gehäuse 132 mit einer Fassung 130 für die Steckerstifte 112 auf. Die Steckerstifte 112 werden so in die Fassung 130 eingeführt, dass sie an einem U-förmig umgebogenen Endbereich mit den Anschlüssen 128 des PTC-Elements 126 elektrisch kontaktiert und beispielsweise verschweißt werden können. Weiterhin weist das Gehäuse 132 eine Heizelementaufnahme 136 auf, in der das PTC-Element 126 gehalten und bei der Montage geführt ist. Die Führung beim Einbau des Heizelementeinsatzes 108 in die Aufnahme 110 der Scheibenwaschanlagendüse 100 erfolgt über die Führungsnut 134. Nach dem Einbau in die Scheibenwaschanlagendüse 100 kann der Heizelementeinsatz mit Hilfe einer Vergussmasse mechanisch fixiert werden.

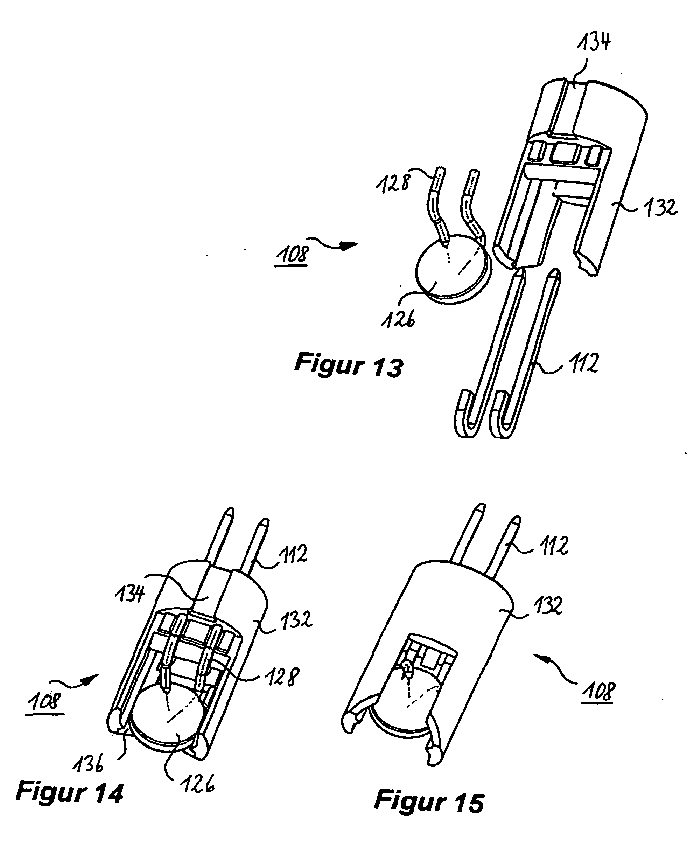

Weitere perspektivische Ansichten des Heizelementeinsatzes 108 sind in den Figuren 13 bis 15 gezeigt. Obwohl die Steckerstifte 112 in der gezeigten Ausführungsform mit rechteckförmigem Querschnitt dargestellt sind, sind auch runde Steckerstifte 112 möglich.

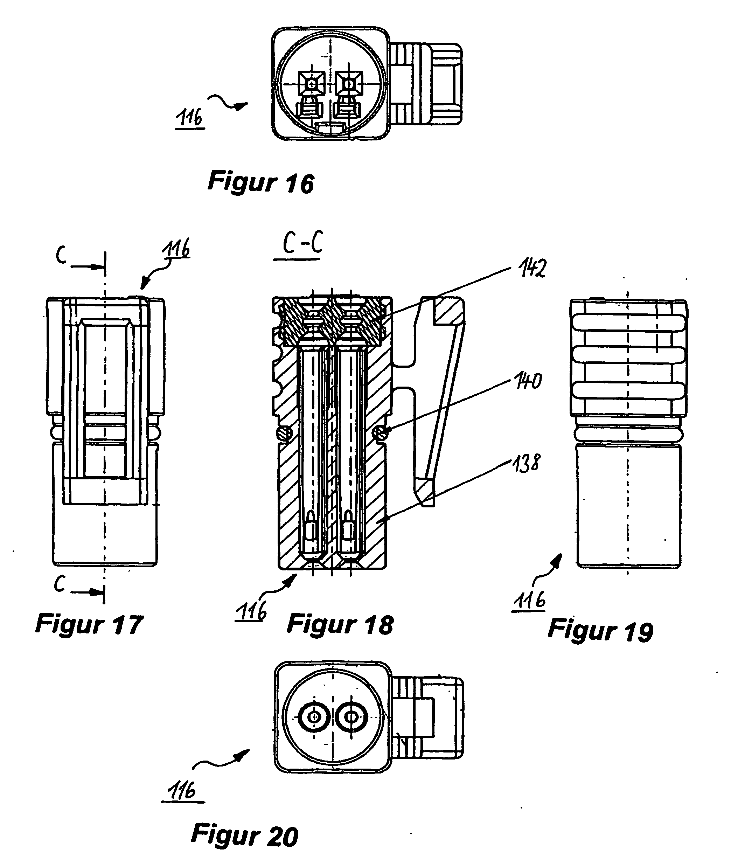

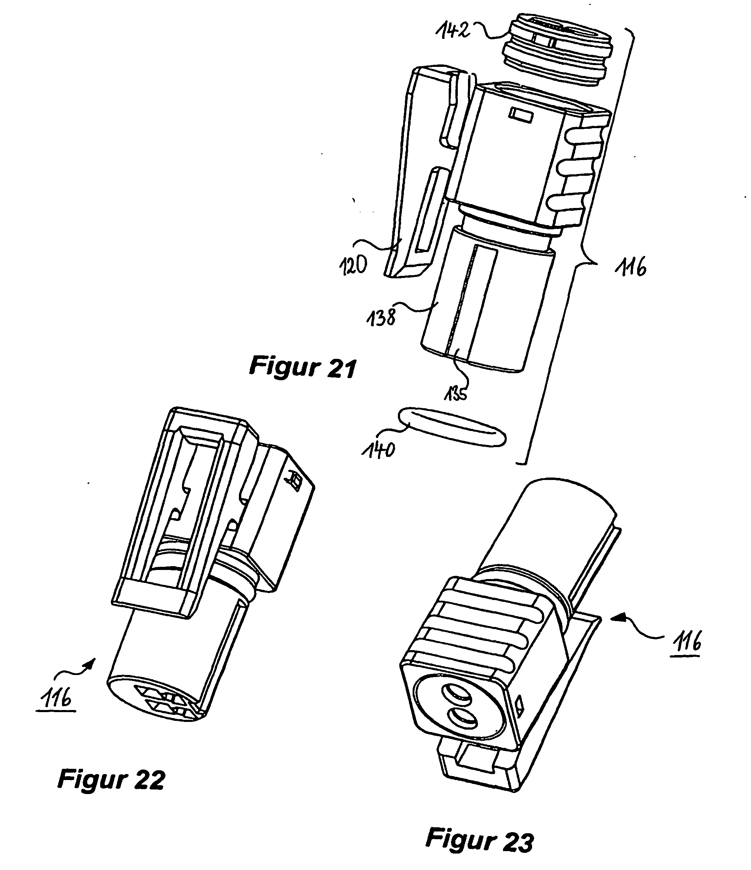

Das Buchsenteil 116, über das der elektrische Kontakt zwischen der Scheibenwaschanlagendüse und einem elektrischen Anschlusskabel hergestellt wird, ist in verschiedenen Ansichten in den Figuren 16 bis 23 dargestellt. Das Buchsenteil 116 weist ein vorzugsweise aus Kunststoff bestehendes isolierendes Gehäuse 138, an das einstückig das Rastelement 120 angeformt ist, auf. Eine Führungsnut 135 ermöglicht eine sichere Ausrichtung und Führung des Buchsenteils 116 durch Führung über den Führungsvorsprung 118. Um die elektrische Verbindung bei eingestecktem Buchsenteil 116 gegenüber eindringender Feuchtigkeit zu sichern, ist ein O-Ring 140 als Dichtring vorgesehen. Die Dichtung 142 dichtet bei eingestecktem, hier nicht dargestelltem Anschlusskabel diese Verbindung gegenüber Umgebungsfeuchtigkeit ab.

## Patentansprüche

1. Beheizbare Scheibenwaschanlagendüse vorzugsweise für ein Kraftfahrzeug mit einem Grundkörper (102), der wenigstens eine Spritzdüse und jeweils einen zu jeder Spritzdüse führenden Wasserkanal aufweist, und mit einem Heizelement (126), das eine reversibel lösbare elektrische Verbindung (114, 116) zum elektrischen Kontaktieren des Heizelements (126) mit einem Anschlusskabel aufweist,
**dadurch gekennzeichnet,**
**dass** der Grundkörper (102) einen Heizelementeinsatz (108) aufweist, in dem das Heizelement (126) angeordnet ist, wobei der Heizelementeinsatz (108) ein elektrisch isolierendes Gehäuse (132) mit einer im wesentlichen zylinderförmigen äußeren Form hat und zumindest teilweise in eine zugehörige rohrförmig ausgestaltete Aufnahme (110) in dem Grundkörper (102) einführbar ist, und die reversibel lösbare elektrische Verbindung in Form einer gegenüber dem Grundkörper (102) elektrisch isolierten Steckverbindung an dem Gehäuse (132) des Heizelementeinsatzes (108) ausgebildet ist.

2. Beheizbare Scheibenwaschanlagendüse nach Anspruch 1, **dadurch gekennzeichnet, dass** die elektrische Verbindung (114, 116) als Steckverbindung mit einem Buchsenteil (116) und einem Steckerteil (114) ausgebildet ist.

3. Beheizbare Scheibenwaschanlagendüse nach Anspruch 2, **dadurch gekennzeichnet, dass** das Steckerteil (114) der Scheibenwaschanlagendüse (100) und das Buchsenteil (116) dem Anschlusskabel zugeordnet ist.

4. Beheizbare Scheibenwaschanlagendüse nach Anspruch 2 oder 3, **dadurch gekennzeichnet, dass** das Steckerteil (114) zwei Kontaktstifte (112) aufweist.

5. Beheizbare Scheibenwaschanlagendüse nach einem der Ansprüche 1 bis 4, **dadurch gekennzeichnet, dass** das Heizelement (126) ein PTC-Element ist.

6. Beheizbare Scheibenwaschanlagendüse nach einem der Ansprüche 1 bis 5, **dadurch gekennzeichnet, dass** die elektrische Verbindung (114, 116) bei der Montage in der Aufnahme (110) geführt ist.

7. Beheizbare Scheibenwaschanlagendüse nach Anspruch 6, **dadurch gekennzeichnet, dass** die Aufnahme (110) einen Führungsvorsprung (118) aufweist, der mit einer Führungsnut (134, 135) am äußeren Umfang eines, die elektrische Verbindung bildenden Teiles (114, 116) zusammenwirkt.

8. Beheizbare Scheibenwaschanlagendüse nach einem der Ansprüche 1 bis 7, **dadurch gekennzeichnet, dass** der Heizelementeinsatz (108) eine Heizelementaufnahme (136), in die das Heizelement (126) einschiebbar ist, aufweist.

9. Beheizbare Scheibenwaschanlagendüse nach einem der Ansprüche 1 bis 8, **dadurch gekennzeichnet, dass** der Grundkörper (102) ein Rastelement (122) aufweist, das mit einem zugehörigen Gegenstück (120) die elektrische Verbindung (114, 116) durch Verrasten mechanisch fixiert.

## Claims

1. A heatable windscreen washer jet, preferably for a motor vehicle, having a body (102), which comprises at least one spray nozzle and a water duct leading to each spray nozzle, and having a heating element (126), which comprises a reversibly detachable electrical connection (114, 116) for electrical contacting of the heating element (126) with a connecting cable,
**characterised in that**
the body (102) comprises a heating element insert (108), in which the heating element (126) is arranged, wherein the heating element insert (108) has an electrically insulating housing (132) with a substantially cylindrical external shape and is at least partially insertable into an associated tubular receptacle (110) in the body (102), and the reversibly detachable electrical connection takes the form of a plug connection, insulated electrically relative to the body (102), on the housing (132) of the heating element insert (108).

2. A heatable windscreen washer jet according to claim 1, **characterised in that** the electrical connection (114, 116) takes the form of a plug connection with a socket part (116) and a plug part (114).

3. A heatable windscreen washer jet according to claim 2, **characterised in that** the plug part (114) is associated with the windscreen washer jet (100) and the socket part (116) with the connecting cable.

4. A heatable windscreen washer jet according to claim 2 or claim 3, **characterised in that** the plug part (114) comprises two contact pins (112).

5. A heatable windscreen washer jet according to any one of claims 1 to 4, **characterised in that** the heating element (126) is a PTC element.

6. A heatable windscreen washer jet according to any one of claims 1 to 5, **characterised in that** the electrical connection (114, 116) is guided when fitted in the receptacle (110).

7. A heatable windscreen washer jet according to claim 6, **characterised in that** the receptacle (110) comprises a guide projection (118), which cooperates with a guide groove (134, 135) on the outer circumference of a part (114, 116) forming the electrical connection.

8. A heatable windscreen washer jet according to any one of claims 1 to 7, **characterised in that** the heating element insert (108) comprises a heating element receptacle (136), into which the heating element (126) may be inserted.

9. A heatable windscreen washer jet according to any one of claims 1 to 8, **characterised in that** the body (102) comprises a catch element (122), which latches together with an associated counterpart (120) so as mechanically to fix the electrical connection (114, 116).

## Revendications

1. Gicleur à chauffage pour installation de lavage de vitres, de préférence pour un véhicule automobile, comportant un corps de base (102) comportant au moins une buse de pulvérisation et un canal d'eau menant vers chaque buse de pulvérisation, et un élément de chauffage (126) comportant un moyen de connexion électrique à dégagement réversible (114, 116) en vue de la mise en contact de l'élément de chauffage (126) avec un câble de connexion,
**caractérisé en ce que**
le corps de base (102) comporte un insert de l'élément de chauffage (108) dans lequel est agencé l'élément de chauffage (126), l'insert de l'élément de chauffage (108) comportant un boîtier isolant (132) avec une forme externe pratiquement cylindrique et pouvant être inséré au moins partiellement dans un logement de forme tubulaire correspondant (110) dans le corps de base (102), le moyen de connexion électrique à dégagement réversible ayant la forme d'un moyen de connexion à fiche à isolation électrique par rapport au corps de base (102) agencé sur le boîtier (132) de l'insert de l'élément de chauffage (108).

2. Gicleur à chauffage pour installation de lavage de vitres selon la revendication 1, **caractérisé en ce que** le moyen de connexion électrique (114, 116) a la forme d'un moyen de connexion à fiche avec un élément femelle (116) et un élément mâle (114).

3. Gicleur à chauffage pour installation de lavage de vitres selon la revendication 2, **caractérisé en ce que** l'élément mâle (114) du gicleur de l'installation de lavage de vitres (100) et l'élément femelle (116) sont affectés au câble de connexion.

4. Gicleur à chauffage pour installation de lavage de vitres selon les revendications 2 ou 3, **caractérisé en ce que** l'élément mâle (114) comporte deux broches de contact (112).

5. Gicleur à chauffage pour installation de lavage de vitres selon l'une des revendications 1 à 4, **caractérisé en ce que** l'élément de chauffage (126) est un élément PTC.

6. Gicleur à chauffage pour installation de lavage de vitres selon l'une des revendications 1 à 5, **caractérisé en ce que** le moyen de connexion électrique (114, 116) est guidé lors du montage dans le logement (110).

7. Gicleur à chauffage pour installation de lavage de vitres selon la revendication 6, **caractérisé en ce que** le logement (110) comporte une saillie de guidage (118), coopérant avec une rainure de guidage (134, 135) sur la périphérie externe d'une partie constituant (114, 116) le moyen de connexion électrique.

8. Gicleur à chauffage pour installation de lavage de vitres selon l'une des revendications 1 à 7, **caractérisé en ce que** l'insert de l'élément de chauffage (108) comporte un logement de l'élément de chauffage (136), dans lequel l'élément de chauffage (126) peut être inséré.

9. Gicleur à chauffage pour installation de lavage de vitres selon l'une des revendications 1 à 8, **caractérisé en ce que** le corps de base (102) comporte un élément d'encliquetage (122) assurant la fixation mécanique par encliquetage du moyen de connexion électrique (114, 116) avec un élément d'accouplement (120).
